## Europäisches Patentamt

## European Patent Office

## Office européen des brevets

(11) Veröffentlichungsnummer: **0 214 126 B1**

# EUROPÄISCHE PATENTSCHRIFT

(45) Veröffentlichungstag der Patentschrift:
27.09.89

(21) Anmeldenummer: 85901006.8

(22) Anmeldetag: 09.02.85

(86) Internationale Anmeldenummer:
PCT/EP 85/00048

(87) Internationale Veröffentlichungsnummer:
WO 86/04519 (14.08.86 Gazette 86/18)

(51) Int. Cl.⁴: **B 01 D 53/34**

(54) REINIGUNGSANLAGE UND VERFAHREN ZUM ENTZUG VON SCHADSTOFFEN AUS HEISSEN GASEN.

(43) Veröffentlichungstag der Anmeldung:
18.03.87 Patentblatt 87/12

(45) Bekanntmachung des Hinweises auf die Patenterteilung:
27.09.89 Patentblatt 89/39

(84) Benannte Vertragsstaaten:
AT BE CH DE FR GB LI NL SE

(56) Entgegenhaltungen:
EP-A- 0 107 144
LU-A- 66 955

(73) Patentinhaber: EVS Energie-Versorgungs-Systeme GmbH & Co. Umwelttechnologie KG, Lindenallee 28, D-5000 Köln 51 (DE)

(72) Erfinder: SREDNICKI, Franz-Gerhard, Timmerlahstrasse 125 a, D-3300 Braunschweig (DE)

(74) Vertreter: Gramm, Werner, Dipl.-Ing. et al, Patentanwälte Gramm + Lins Theodor-Heuss-Strasse 2, D-3300 Braunschweig (DE)

## Beschreibung

Die Erfindung betrifft ein Verfahren zum Entzug von Schadstoffen aus heißen Gasen, bei dem der Feuchtigkeitsgehalt des heißen Gases beim Eintritt in die Reinigungsanlage eingestellt und eine kontrollierte, stufenweise Abkühlung auf verschiedene Temperaturen vorgenommen wird, bei denen jeweils eine Abscheidung von Kondensat kurz unterhalb des Taupunktes der jeweiligen, durch Abgasanteile mit dem Kondensat gebildeten Säure erfolgt und nach einer weiteren Abkühlung mit dem Kondensat Schwermetalle abgeführt werden. Die Erfindung betrifft ferner eine Reinigungsanlage zur Durchführung des Verfahrens.

Die Erfindung befaßt sich insbesondere mit der Reinigung von Rauchgasen. Es ist bekannt, daß in die Atmosphäre gelangende, mit Schadstoffen belastete Gase eine erhebliche Umweltbelastung darstellen und erhebliche Schäden anrichten. Die Schadstoffe gelangen insbesondere zusammen mit Wassertropfen wieder auf die Erde und verseuchen den Boden, so daß die auf diesem wachsenden Pflanzen vergiftet oder zerstört werden. Diese Erscheinung ist als «saurer Regen» bekannt.

Für den sauren Regen wird insbesondere der Schwefelgehalt der Abgase verantwortlich gemacht. Es ist deshalb bekannt und inzwischen für Großfeuerungsanlagen vorgeschrieben, die Rauchgase zu entschwefeln. Hierfür wird das Gas ausgewaschen, wodurch Schwefelsäure in hoher Verdünnung entsteht. Diese Schwefelsäure ist äußerst aggressiv und macht daher bei ihrer Handhabung erhebliche Schwierigkeiten.

Die Entschwefelung der Rauchgase ist zwischenzeitlich aber auch als unzureichend erkannt worden. Ein wesentlicher Teil der schädigenden Wirkung des sauren Regens ist nicht dem Schwefelgehalt, sondern dem Gehalt an Schwermetallen zuzuschreiben.

Unter der Bezeichnung KOS-Verfahren ist ein Verfahren bekanntgeworden, durch das sowohl Schwefeldioxid als auch Schwermetalle aus dem Rauchgas entfernt werden können. Hierzu wird das Rauchgas abgekühlt, woraufhin bei einer Temperatur oberhalb von 60° Schwefelsäure abgeführt wird. Nach einer weiteren Abkühlung wird Kondensat abgeführt, das Schwermetalle enthält. Nach einer abschließenden Waschung des Gases wird dieses in die Atmosphäre abgeblasen.

Das KOS-Verfahren nutzt demzufolge die Kondensation der in dem Rauchgas enthaltenen Feuchtigkeit aus, um Schadstoffe aus dem Rauchgas zu entfernen. Zur Erleichterung der Kondensation zur Schwefelsäure wird vor dem Abscheiden der Schwefelsäure dem Rauchgas ein Oxidationsmittel in Form von Wasserstoffperoxid $(H_2O_2)$ zugeführt. Hierdurch wird die Oxidation von $SO_2$ in $SO_3$ unterstützt.

Das KOS-Verfahren bietet den Vorteil, daß durch die Abkühlung der Rauchgase eine Wärmerückgewinnung betrieben werden kann. Darüberhinaus ist auch die bei der Kondensation entstandene Schwefelsäure wirtschaftlich verwertbar.

Durch die EP-A-0 107 144 ist es bekannt, bei dem KOS-Verfahren vor der Abscheidung der Schwefelsäure Oxidationsmittel in solch einer Menge zuzusetzen, daß sich auf den Schwefelgehalt des Abgases bezogen ein stöchiometrisches Verhältnis von 0,8 bis 2,0 bildet. Demzufolge wird das Oxidationsmittel in einer solchen Menge zugesetzt, daß es praktisch den gesamten $SO_2$-Anteil des Abgases zu $SO_3$ aufoxidieren kann, so daß sich hieraus Schwefelsäure bildet. Am Eingang der Reinigungsanlage wird das Abgas auf eine Temperatur von etwa 100°C bis 72°C mit einem Wassergehalt von 30 bis 40°C g/m³ eingestellt.

Der Erfindung liegt die Aufgabe zugrunde, die eingangs erwähnte Reinigung der heißen Gase von Schadstoffen so auszugestalten, daß die Reinigung mit einem hohen Wirkungsgrad mit einem wesentlich geringeren erforderlichen Zusatz von Oxidationsmittel erfolgt.

Diese Aufgabe wird erfindungsgemäß bei dem Verfahren der eingangs erwähnten Art dadurch gelöst, daß der Gehalt an freiem Sauerstoff in dem Abgas vor Eintritt in die Reinigungsanlage bei dessen Temperatur zwischen 100°C und 150°C auf mindestens 5 Vol. % eingestellt wird und daß vor der Abscheidung von Schwefelsäure ein Oxidationsmittel in der Reinigungsanlage mit einem stöchiometrischen Verhältnis von 0 bis weniger als 0,5 bezogen auf den Schwefelgehalt des Rauchgases eingestellt wird.

Der Erfindung liegt die Erkenntnis zugrunde, daß der Entschwefelungsgrad mittels der Kondensation auch bei einer reichlichen Zugabe von Oxidationsmitteln nicht über eine gewisse Grenze gebracht werden kann, wenn die Aufoxidation nur mit Hilfe der Oxidationsmittel erfolgen muß. Erfindungsgemäss wird daher der Gehalt an freiem Sauerstoff in dem Abgas am Eintritt in die Reinigungsanlage auf wenigstens 5 Vol. % eingestellt. Für eine Abscheiderate von mehr als 90% sollte der Gehalt an freiem Sauerstoff mehr als 7,5 Vol. % betragen und für eine Abscheiderate von 95% mehr als 12 Vol. %.

Durch die Einstellung des Gehaltes an freiem Sauerstoff in dem Abgas kann die Zugabe von Oxidationsmitteln erheblich reduziert werden, weil sich in dem Abgas aufgrund zahlreicher Effekte bei Vorhandensein einer ausreichenden Feuchtigkeit bereits $H_2SO_4$ in Form eines Aerosols bildet. Dies bedeutet, daß bereits ein wesentlicher Teil des gasförmigen $SO_2$ beim Eintritt in die Reinigungsanlage in $H_2SO_4$ in Aerosolform übergangen ist. Es hat sich gezeigt, daß bei einem ausreichenden Gehalt an freiem Luftsauerstoff auf die Zugabe von Oxidationsmitteln sogar völlig verzichtet werden kann, wobei Abscheideraten von mehr als 90% des $SO_2$ erreicht werden. Auf jeden Fall kann die Zugabe von Oxidationsmitteln sehr sparsam erfolgen, und zwar immer mit einem stöchiometrischen Verhältnis auf den Schwefelgehalt des Abgases von < 0,5. In vielen Fällen ist sogar eine Zugabe mit einem stöchiometrischen Verhältnis von 0,1 bis 0,2 ausreichend, um eine nahezu 100%ige Abscheiderate zu erzielen, wenn der Gehalt an freiem Sauerstoff ausreichend hoch eingestellt ist.

Besonders gute Ergebnisse werden erzielt, wenn der Wassergehalt des Abgases beim Eintritt in die Reinigungsanlage 100 g/m³ $\pm^{20}_{15}$ g/m³ ist. Bei diesem Wassergehalt entsteht eine ausreichende Kondensatmenge zur Bildung der Säure, andererseits wird diese durch zuviel Wasser nicht zu stark verdünnt. Durch eine Regelung des Feuchtigkeitsgehalts der heißen Gase ist es möglich, eine Mehrzahl von Säuren in reiner Form dadurch auszuscheiden, daß eine sehr genaue stufenweise Abkühlung auf verschiedene Temperaturen vorgenommen wird, die kurz unterhalb des jeweiligen Taupunktes der betreffenden Säure liegt.

Vorzugsweise wird die Feuchtigkeitseinstellung bei Abgastemperaturen von über 110°C vorgenommen.

Durch die Einstellung der Feuchtigkeit ist es möglich, nicht nur Schwefelsäure, sondern auch Salpetersäure und Salzsäure in stark konzentrierter Form auszuscheiden, wenn im Rauchgas auch Nitrate und Chlorverbindungen enthalten sind.

Die Abscheidung von konzentrierter Salpetersäure sollte bei ca. 60°C, die Abscheidung von konzentrierter Salzsäure bei ca. 45°C vorgenommen werden.

Bei dem erfindungsgemäßen Verfahren können die Schwermetalle zu einem hohen Prozentsatz aus dem Gas entfernt werden, wenn eine weitere Abscheidung von Kondensat bei ca. 30°C vorgenommen wird.

Besondere Maßnahmen gegen die Bildung von Tröpfchen beim Eintritt des abgekühlten Gases in die Atmosphäre können vermieden werden, wenn das Rauchgas vor Austritt in die Atmosphäre auf unter 5°C abgekühlt wird und das dabei entstehende Kondensat abgeleitet wird. Das Gas hat dann einen Feuchtigkeitsgehalt, der sicher unter dem Feuchtigkeitsgehalt der Umgebungsluft liegt, so daß eine Tröpfchenbildung mit dem Gas völlig ausgeschlossen werden kann.

Die Erfindung soll im folgenden anhand eines in der Zeichnung dargestellten Ausführungsbeispiels näher erläutert werden.

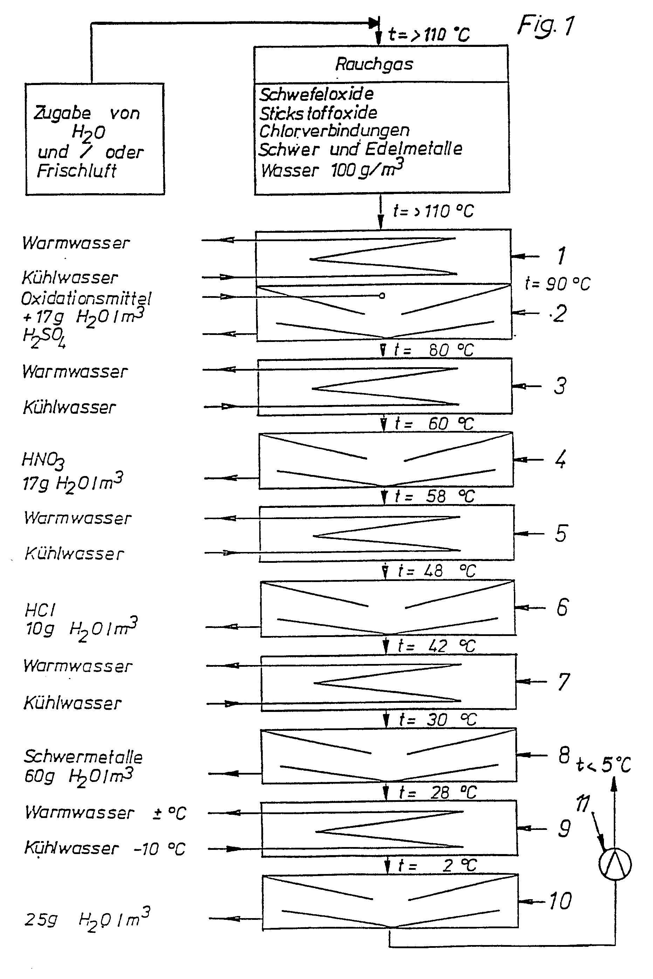

Figur 1 zeigt ein Ablaufschema für eine Rauchgasreinigung gemäß der Erfindung. Das Rauchgas, in dem üblicherweise Schwefeloxide, Stickoxide, Chlorverbindungen, Schwer- und Edelmetalle enthalten sind, weist beim Eintritt in die Reinigungsanlage eine Temperatur von > 110°C auf. Durch Zugabe von Wasser oder Frischluft wird sichergestellt, daß das heiße Gas einen Wassergehalt von 100 g/m³ aufweist und der Anteil an freiem Sauerstoff in dem Abgas mindestens 5 Vol. % beträgt. Das Gas durchläuft dann einen Wärmetauscher 1, der das Gas auf ca. 90°C abkühlt. Dem Wärmetauscher 1 ist ein Abscheider 2 nachgeschaltet, in den ein Oxidationsmittel, wie beispielsweise in Wasser gelöstes Wasserstoffperoxid ($H_2O_2$), eingeleitet wird. Das im Rauchgas noch enthaltene Schwefeldioxid wird durch das Oxidationsmittel zu Schwefeltrioxid ($SO_3$) oxidiert und bildet Schwefelsäure ($H_2SO_4$). Die Schwefelsäure wird in konzentrierter Form, in der sie nur gering aggressiv ist, abgeleitet und kann einer weiteren Verwendung zugeführt werden. Am Ausgang des Abscheiders 2 weist das Gas eine Temperatur von ca. 89°C auf. In einem weiteren Wärmetauscher 3 wird das Gas auf ca. 60°C abgekühlt und einem weiteren Abscheider 4 zugeführt, in dem Nitratverbindungen mit dem Kondensat Salpetersäure ($HNO_3$) bilden. Die Salpetersäure entsteht ebenfalls in konzentrierter Form und wird abgeleitet. Das am Ausgang dieser Stufe etwa 58°C warme Gas wird in einem weiteren Wärmetauscher 5 auf ca. 48°C abgekühlt und einem Abscheider 6 zugeführt, in dem konzentrierte Salzsäure entsteht. Nach einer weiteren Abkühlung in einem Wärmetauscher 7 fallen Schwermetalle mit Kondensat in einem Abscheider 8 bei etwa 30°C aus.

Das Rauchgas ist nunmehr praktisch vollständig gereinigt. Abhängig von der Entfernung der Schwefeloxide durch die Zugabe von Oxidationsmitteln und die Abscheidung im Abscheider 2 kann noch ein Restbestandteil an Schwefeldioxid in dem Gas enthalten sein. Dieses kann nach herkömmlicher Methode aus dem Gas ausgewaschen werden, nachdem die Abkühlung auf ca. 30°C erfolgt ist.

Im allgemeinen wird es jedoch ausreichen, wie es in einer vorteilhaften Ausführung des Verfahrens vorgesehen ist, das Gas in einer weiteren Wärmetauscherstufe 9, die vorzugsweise mit Kühlmitteln beschickt ist, eine Abkühlung auf etwa den Gefrierpunkt (+ 2°C) herbeizuführen und, um in einem letzten Abscheider 10 das Kondensat abzuführen, wodurch das Gas praktisch vollständig getrocknet ist. Es kann nun gegebenenfalls über einen Ventilator 11 in die Atmosphäre abgegeben werden, wobei es eine Temperatur von weniger als 5°C hat.

Das trockene Gas bildet in der Umgebung der Auslaßstelle keine Tröpfchen, da die Feuchtigkeit der Umgebungstemperatur mit Sicherheit höher liegt. Daher kommt es nicht zu einer höheren Belastung in der unmittelbaren Umgebung der Gasaustrittsstelle, so daß auch gewisse Restschadstoffkonzentrationen in Kauf genommen werden können, weil sie sich nicht in einem kleinen, räumlichen Bereich niederschlagen.

Selbstverständlich ist es möglich, bei der Behandlung von schwefelfreien Gasen auf die erste Abkühlstufe zu verzichten und zur Abscheidung von Salpetersäure gleich das Gas auf 60°C abzukühlen. Wesentlich ist nur, daß zumindest der erste Wärmetauscher regelbar ist, damit bei verschiedenen Gasaustrittstemperaturen die gewünschte, bestimmte Temperatur eingestellt werden kann. Die Regelung des Wärmetauschers 1 bzw. 3 kann dadurch erfolgen, daß ein Stellventil über ein Temperaturmeßelement gesteuert wird und die Menge des Kühlwassers, die in den Wärmetauscher 1 bzw. 3 fließt, regelt. Weiterhin ist es möglich, bei Vorhandensein anderer Schadstoffe eine Abscheidung bei einer ganz anderen Temperatur vorzusehen, um eine andere Säure zu gewinnen.

Das erfindungsgemäße Verfahren erlaubt eine Gewinnung von sehr reinen Säuren, weil die Kondensation wegen der Einstellung der Feuchtigkeit des Rauchgases sehr genau fraktioniert werden kann. Die gewonnene Schwefelsäure wird daher nicht durch Salpetersäure, die gewonnene Salpetersäure nicht durch Salzsäure usw. verunreinigt.

Durch die Kühlkreisläufe wird automatisch warmes Wasser gewonnen, dessen Wärme für die verschiedensten Zwecke ausgenutzt werden kann, so daß eine automatische Wärmerückgewinnung erfolgt. Das dargestellte Verfahren erweist sich daher als außerordentlich wirtschaftlich.

Es hat sich gezeigt, daß bei einem Feuchtigkeitsgehalt von über 120 g/m³ und unter 85 g/m³ die Entschwefelung unter 85% absinkt.

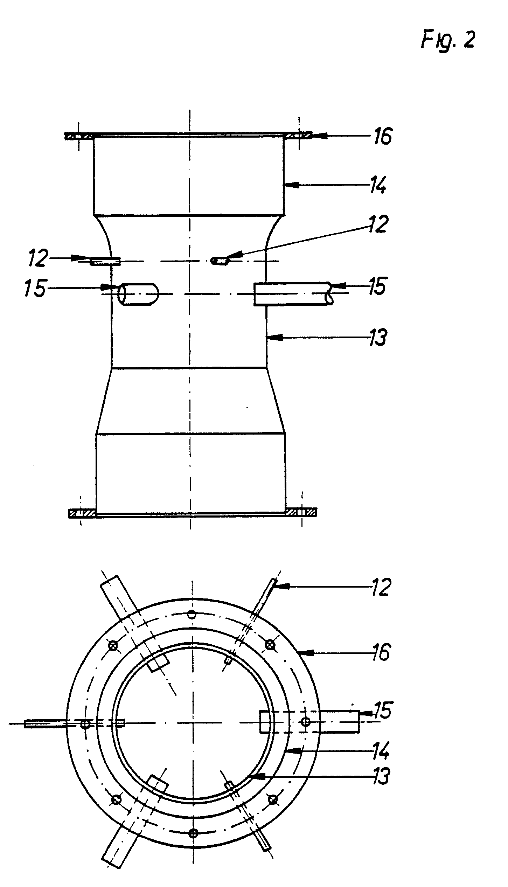

Figur 2 zeigt die Anordnung von Zuführungsleitungen für freien Sauerstoff enthaltende Frichluft und für Wasser zum Abgas vor dem ersten Wärmetauscher 1. Eine Zugabeleitung 12 für Frischluft befindet sich an der Stelle einer Verengung 13 einer Abgasleitung 14. Die Verengung bildet eine Art Venturidüse, in der das Abgas komprimiert wird. Die Zugabe der Frischluft über die Zugabeleitung 12 an dieser Stelle führt aufgrund der nach der Verengung 13 vorhandenen Erweiterung der Rohrleitung bewirkten Entspannung des Abgases zu einer guten Durchmischung der Frischluft mit dem Abgas. In Bereich der Verengung können auch Zuführungsleitungen 15 für das Wasser vorgesehen sein, um den Wassergehalt des Abgases in der gewünschten Weise einzustellen.

Die Draufsicht auf einen Anschlußflansch 16 der Abgasleitung 14 in Figur 2 verdeutlicht, daß die Zuführungsleitung 12 und 15 über den Umfang der Abgasleitung 14 gleichmäßig verteilt in diese münden, was zu einer gleichmäßigen Durchmischung der zugeführten Frischluft bzw. des zugeführten Wassers mit beiträgt.

**Patentansprüche**

1. Verfahren zum Entzug von Schadstoffen aus heißen Gasen, bei dem der Feuchtigkeitsgehalt des heißen Gases beim Eintritt in die Reinigungsanlage eingestellt und eine kontrollierte, stufenweise Abkühlung auf verschiedene Temperaturen vorgenommen wird, bei denen jeweils eine Abscheidung von Kondensat kurz unterhalb des Taupunktes der jeweiligen, durch Abgasanteile mit dem Kondensat gebildeten Säure erfolgt und nach einer weiteren Abkühlung mit dem Kondensat Schwermetalle abgeführt werden, dadurch gekennzeichnet, daß der Gehalt an freiem Sauerstoff in dem Abgas vor Eintritt in die Reinigungsanlage bei dessen Temperatur zwischen 100°C und 150°C auf mindestens 5 Vol. % eingestellt wird, daß vor der Abscheidung von Schwefelsäure ein Oxidationsmittel in der Reinigungsanlage mit einem stöchiometrischen Verhältnis von 0 bis weniger als 0,5 bezogen auf den Schwefelgehalt des Rauchgases eingestellt wird.

2. Verfahren nach Anspruch 1, dadurch gekennzeichnet, daß eine Zuführung von Sauerstoff nach einer Komprimierung des Abgasstromes erfolgt und daß nach der Zuführung des Sauerstoffs der Abgasstrom wieder entspannt wird.

3. Verfahren nach Anspruch 1 oder 2, dadurch gekennzeichnet, daß die Abscheidung von Schwefelsäure bei ca. 90°C erfolgt.

4. Verfahren nach einem der Ansprüche 1 bis 3, dadurch gekennzeichnet, daß eine Abscheidung von konzentrierter Salpetersäure bei ca. 60°C vorgenommen wird.

5. Verfahren nach einem der Ansprüche 1 bis 4, dadurch gekennzeichnet, daß eine Abscheidung von konzentrierter Salzsäure bei ca. 45°C vorgenommen wird.

6. Verfahren nach einem der Ansprüche 1 bis 5, dadurch gekennzeichnet, daß eine weitere Abscheidung von Kondensat bei ca. 30°C vorgenommen wird.

7. Verfahren nach einem der Ansprüche 1 bis 6, dadurch gekennzeichnet, daß das Rauchgas vor Austritt in die Atmosphäre auf unter 5°C abgekühlt wird.

8. Verfahren nach einem der Ansprüche 1 bis 7, dadurch gekennzeichnet, daß eine letzte Abscheidung von Kondensat um den Gefrierpunkt von Wasser erfolgt.

9. Verfahren nach einem der Ansprüche 1 bis 8, dadurch gekennzeichnet, daß das heiße Gas mit einer Temperatur von > 110°C in die Reinigungsanlage eintritt.

10. Verfahren nach einem der Ansprüche 1 bis 9, dadurch gekennzeichnet, daß das heisse Gas beim Eintritt in die Reinigungsanlage auf einem Wassergehalt von 100 g/m³ $^{+20}_{-15}$ g/m³ eingestellt wird.

11. Reinigungsanlage für mit Schadstoffen belastete heiße Gase zur Durchführung des Verfahrens nach einem der Ansprüche 1 bis 10, gekennzeichnet durch eine Meß- und Regelstufe für den Feuchtigkeitsgehalt des heißen Gases, einen ersten Wärmetauscher (1) zur definierten Abkühlung auf eine vorbestimmte Temperatur und weiteren Wärmetauschern (3, 5, 7, 9), durch den Wärmetauschern (1, 3, 5, 7, 9) nachgeschaltete Kondensatabscheider (2, 4, 6, 8, 10), und durch eine Zugabeleitung (12) für ein Gas, die in eine Rohrleitung (14) für das heiße Gas mündet.

12. Reinigungsanlage nach Anspruch 11, dadurch gekennzeichnet, daß die Zugabeleitung in einer Verengung (13) der Rohrleitung (14) für das heiße Gas in die Rohrleitung (14) mündet und daß sich stromabwärts der Zugabeleitung (12) die Rohrleitung (14) wieder erweitert.

**Claims**

1. Process for removing pollutants from hot gases, in which the moisture content of the hot gas on entry into the cleaning apparatus is adjusted and a controlled, stepwise cooling to various temperature is carried out, at each of which a separation of condensate a little beneath the dewpoint of the respective acids formed from exhaust gas components with the condensate takes place and after a further cooling heavy metals are taken off with the condensate, characterized in that the content of free oxygen in the exhaust gas before entry into the cleaning apparatus at a temperature thereof between 100°C and 150°C is adjusted to at least 5% by volume, in that before the separation of sulphuric acid an oxidant in the cleaning apparatus is adjusted to a stoichiometric ratio of 0 to less than 0.5 relative to the sulphur content of the flue gas.

2. Method according to claim 1, characterized in that an addition of oxygen is effected after compressing the exhaust gas stream and in that the exhaust gas stream is expanded again after the introduction of the oxygen.

3. Method according to claim 1 or 2, characterized in that the separation of sulphuric acid takes place at about 90°C.

4. Method according to one of claims 1 to 3, characterized in that a separation of concentrated nitric acid is effected at about 60°C.

5. Method according to one of claims 1 to 4, characterized in that a separating of concentrated hydrochloric acid is effected at about 45°C.

6. Method according to one of claims 1 to 5, characterized in that a further separation of condensate is effected at about 30°C.

7. Method according to one of claims 1 to 6, characterized in that the flue gas is cooled to below 5°C before exit to the atmosphere.

8. Method according to one of claims 1 to 7, characterized in that a final separation of condensate takes place at around the freezing point of water.

9. Method according to one of claims 1 to 8, characterized in that the hot gas enters the cleaning apparatus at a temperature of > 110°C.

10. Method according to one of claims 1 to 9, characterized in that the hot gas is adjusted on entry into the cleaning apparatus to a water content of 110°C g/m$^3$ $+ \frac{20}{15}$ g/m$^3$.

11. Cleaning apparatus for hot gases containing pollutants by carrying out the method according to one of claims 1 to 10, characterized by a measuring and control stage for the moisture content of the hot gas, a first heat exchanger (1) for defined cooling to a predetermined temperature and further heat exchangers (3, 5, 7, 9), by condensate separators (2, 4, 6, 8, 10) connected after the heat exchangers (1, 3, 5, 7, 9), and by a feed line (12) for a gas, which opens into a tubular duct (14) for the hot gas.

12. Cleaning apparatus according to claim 11, characterized in that the feed line (12) opens into the tubular duct (14) into a constriction (13) in the tubular duct (14) for the hot gas, and in that the tubular duct (14) widens again downstream of the line (12).

## Revendications

1. Procédé pour retirer de gaz chaude des éléments polluants, pour lequel la teneur en humidité du gaz chaud est réglée, à l'entrée dans l'installation d'épuration, et pour lequel on procède à un refroidissement étagé et contrôlé, à différentes températures pour chacune desquelles une séparation de condensat a lieu un peu en dessous du point de rosée de chacun des acides formés par des fractions du gaz avec le condensat et pour lequel, après un autre refroidissement, des métaux lourds sont éliminés avec le condensat, caractérisé en ce que la teneur en oxygène libre dans l'effluent gazeux, avant l'entrée dans l'installation d'épuration, à la température de celle-ci située entre 100°C et 150°C, est réglée à au moins 5 % en volume et qu'avant l'extraction de l'acide sulfurique, un produit oxydant est ajouté dans l'installation d'épuration avec une proportion stoechiométrique de 0 à moins de 0,5 rapportée à la teneur en soufre des fumées.

2. Procédé suivant la revendication 1, caractérisé en ce qu'un apport d'oxygène a lieu après une compression du courant de l'effluent gazeux et en ce qu'après l'apport d'oxygène le courant de l'effluent gazeux est de nouveau détendu.

3. Procédé suivant la revendication 1 ou 2, caractérisé en ce que la séparation d'acide sulfurique a lieu vers environ 90°C.

4. Procédé suivant l'une quelconque des revendications 1 à 3, caractérisé en ce qu'on procède à une séparation d'acide nitrique concentré à environ 60°C.

5. Procédé suivant l'une quelconque des revendications 1 à 4, caractérisé en ce qu'on procède à une séparation d'acide chlorhydrique concentré à environ 45°C.

6. Procédé suivant l'une quelconque des revendications 1 à 5, caractérisé en ce qu'on procède a une nouvelle séparation de condensat à environ 30°C.

7. Procédé suivant l'une quelconque des revendications 1 à 6, caractérisé en ce que les fumées sont refroidies à une température inférieure à 5°C avant sortie à l'atmosphère.

8. Procédé suivant l'une quelconque des revendications 1 à 7, caractérisé en ce qu'une dernière séparation de condensat a lieu autour du point de congélation de l'eau.

9. Procédé suivant l'une quelconque des revendications 1 à 8, caractérisé en ce que le gaz chaud pénètre à une température supérieure à 110°C dans l'installation d'épuration.

10. Procédé suivant l'une quelconque des revendications 1 à 9, caractérisé en ce qu'à l'entrée dans l'installation d'épuration, le gaz chaud est ajusté à une teneur en eau de 100 g/m$^3$ $+ \frac{20}{15}$ g/m$^3$.

11. Installation d'épuration de gaz chauds chargés de produits polluants pour l'exécution du procédé suivant l'une quelconque des revendications 1 à 10, caractérisée par un étage de mesure et de régulation pour la teneur en humidité du gaz chaud, par un premier échangeur de température (1) pour un refroidissement défini à une température prédéterminée et par d'autres échangeurs de température (3, 5, 7, 9), par des séparateurs de condensat (2, 4, 6, 8, 10), raccordés après les échangeurs de température (1, 3, 5, 7, 9), et par une conduite d'arrivée (12) pour un gaz, conduite qui débouche dans une conduite tubulaire (14) pour le gaz chaud.

12. Installation d'épuration suivant la revendication 11, caractérisée en ce que la conduite d'arrivée débouche dans la conduite tubulaire (14) pour le gaz chaud dans un rétrécissement (13) de la conduite tubulaire (14) et en ce que la conduite tubulaire (14) s'élargit de nouveau en aval de la conduite d'arrivée (12).

**Fig. 1**

Zugabe von H$_2$O und / oder Frischluft

Rauchgas
Schwefeloxide
Sticks toffoxide
Chlorverbindungen
Schwer und Edelmetalle
Wasser 100 g/m$^3$

$t = > 110$ °C

$t = > 110$ °C

Warmwasser

Kühlwasser

Oxidationsmittel
+ 17g H$_2$O l m$^3$
H$_2$SO$_4$

1

$t = 90$ °C

2

$t = 80$ °C

Warmwasser

Kühlwasser

3

$t = 60$ °C

HNO$_3$
17g H$_2$O l m$^3$

4

$t = 58$ °C

Warmwasser

Kühlwasser

5

$t = 48$ °C

HCl
10g H$_2$O l m$^3$

6

$t = 42$ °C

Warmwasser

Kühlwasser

7

$t = 30$ °C

Schwermetalle
60g H$_2$O l m$^3$

8    $t < 5$ °C

$t = 28$ °C

Warmwasser ± °C

Kühlwasser −10 °C

9

11

$t = 2$ °C

25g H$_2$O l m$^3$

10

Fig. 2